# EUROPÄISCHE PATENTSCHRIFT

(11) **EP 4 128 399 B1**
(45) Veröffentlichungstag und Bekanntmachung des Hinweises auf die Patenterteilung: **01.11.2023**
(21) Anmeldenummer: 21711184.8
(22) Anmeldetag: 25.02.2021
(51) Int. Cl.: H01M 8/0206, H01M 8/0245, H01M 8/0273, H01M 8/2483

(54) **BIPOLARPLATTENANORDNUNG, VERWENDUNG EINER BIPOLARPLATTENANORDNUNG UND ELEKTROLYSE- ODER BRENNSTOFFZELLENSTAPEL MIT EINER VIELZAHL VON BIPOLARPLATTENANORDNUNGEN**
BIPOLAR PLATE ASSEMBLY, USE OF A BIPOLAR PLATE ASSEMBLY, AND ELECTROLYSIS OR FUEL CELL STACK COMPRISING A PLURALITY OF BIPOLAR PLATE ASSEMBLIES
ENSEMBLE PLAQUE BIPOLAIRE, UTILISATION D'UN ENSEMBLE PLAQUE BIPOLAIRE, ET EMPILEMENT DE PILES À COMBUSTIBLE OU D'ÉLECTROLYSE COMPRENANT UNE PLURALITÉ D'ENSEMBLES PLAQUES BIPOLAIRES

(30) Priorität: 03.04.2020 DE 102020109430
(43) Veröffentlichungstag der Anmeldung: 08.02.2023
(73) Patentinhaber: Forschungszentrum Jülich GmbH, 52425 Jülich (DE)
(72) Erfinder: MÜLLER, Martin, 53489 Sinzig (DE); ZWAYGARDT, Walter, 52428 Jülich (DE); JANSSEN, Holger, 52428 Jülich (DE); HOLTWERTH, Sebastian, 52064 Aachen (DE); BEHR, Wilfried, 53879 Euskirchen (DE); FEDERMANN, Dirk, 47623 Kevelaer (DE)
(74) Vertreter: Paul & Albrecht Patentanwälte PartG mbB
(86) Internationale Anmeldenummer: PCT/EP2021/054724
(87) Internationale Veröffentlichungsnummer: WO 2021/197718

(56) Entgegenhaltungen:
- DE-A1-102015 100 697
- DE-T2- 60 012 799
- US-A- 6 037 072
- US-A1- 2015 030 959

## Beschreibung

Die vorliegende Erfindung betrifft eine Bipolarplattenanordnung zur Ausbildung eines Elektrolyse- oder Brennstoffzellenstapels. Ferner betrifft die Erfindung die Verwendung einer solchen Bipolarplattenanordnung zur Ausbildung eines Elektrolyse- oder Brennstoffzellenstapels sowie einen Elektrolyse- oder Brennstoffzellenstapel umfassend eine Vielzahl solcher Bipolarplattenanordnungen.

Die Bipolarplatte ist neben der Membran-Elektroden-Einheit die zentrale Komponente im Aufbau eines Elektrolyse- oder Brennstoffzellenstapels. Beide Komponenten zusammen stellen die Widerholeinheit dar. Die Anzahl der Widerholeinheiten in einem Stapel bestimmt die Leistung.

Bei der Wasserelektrolyse muss die Bipolarplatte unterschiedlichste Aufgaben erfüllen. Sie leitet das Speisewasser auf die jeweilige Zellebene ein, verteilt das Speisewasser möglichst homogen über die Zellfläche und leitet das Gemisch aus Wasser und Wasserstoff bzw. Sauerstoff aus der Zellebene ab. Ferner muss der elektrische Strom möglichst homogen durch die Bipolarplatte geleitet werden. Dabei soll die Bipolarplatte eine sehr hohe und homogene elektrische Leitfähigkeit besitzen. Zudem trennt die Bipolarplatte die Anoden- und Kathodenräume zweier benachbarter Zellen gasdicht voneinander ab, ist nach außen gasdicht (Leckagerate <10 exp-6 (mbar l/s) und unterstützt die Abdichtung der Anoden- und Kathodenräume nach außen. Schließlich stellt die Bipolarplatte einen mechanischen und elektrischen Verbund zu den angrenzenden Membran-Elektroden-Einheiten her.

Für die Anwendung einer Brennstoffzelle sind die Aufgaben bekanntlich ähnlich.

Bipolarplatten lassen sich im Wesentlichen hinsichtlich des Ausgangsmaterials unterscheiden. Es sind Bipolarplatten aus Graphit bzw. Graphit/Kunststoff-Kompositmaterialien und Bipolarplatten aus Metallen bekannt. Um eine Medienverteilung über die Plattenebene zu realisieren, beinhalten bekannte Bipolarplatten in aller Regel diskrete Kanäle, durch welche die Betriebsstoffe bzw. Fluide geleitet werden. Die mechanische und elektrische Kontaktierung der Membran-Elektroden-Einheit erfolgt dann über die Stege, welche die Strömungskanäle flankieren. Insbesondere das Einbringen dieser Strömungsverteilerstrukturen, die auch als Flowfields bezeichnet werden, erfordert spezielle Herstellverfahren. Bei den graphitbasierten Bipolarplatten zählen hierzu vor allem das Spritzgießen, das Formpressen und das Fräsen. Metallische Bipolarplatten bestehen in der Regel aus dünnen Folien, in welche die Strömungsverteilerstrukturen durch Prägeprozesse eingebracht werden, beispielsweise durch Tiefziehen. Als metallisches Material wird bei der Elektrolyse aufgrund der mechanischen Eigenschaften, der Korrosionsbeständigkeit und der elektrischen Leitfähigkeit häufig Titan eingesetzt, während bei Brennstoffzellenanwendungen korrosionsbeständige Stähle verwendet werden können. In der Forschung werden zu Testzwecken vereinzelt Strömungsverteilerstrukturen genutzt, die aus porösen Strukturen bestehen.

Bei konventionellen Bipolarplatten haben die Strömungsverteilerstrukturen über der aktiven Zellfläche eine makroskopische Struktur. Kanal- und Stegbreiten liegen im Bereich von 1 mm. Die Kanallängen sind noch wesentlich größer. Selbst bei Zwischenlage von porösen Schichten in Form von Gasdiffusionslagen ist die Strömungsverteilung über die aktive Zellfläche nicht homogen. Damit einher gehen dann Inhomogenitäten bei der Stromdichte- und Temperaturverteilung. Dies wiederum kann zu Schädigungen durch Hotspots oder beschleunigte Alterung führen.

Ferner besitzen diskrete Kanalstrukturen keine Flexibilität bei geänderten Betriebsbedingungen. Die Auslegung von Kanalhöhe und Kanaltiefe erfolgt für einen definierten Betriebspunkt, der beispielsweise durch den Volumenstrom, die Temperatur und das Flüssigkeits/Gas-Verhältnis definiert ist. Sobald es Abweichungen von diesem Betriebspunkt gibt, die durch An- oder Abfahrvorgänge, Lastwechsel, Änderungen der stöchiometrischen Verhältnisse oder dergleichen verursacht werden, können diese zu Problemen bei der gleichmäßigen Verteilung und der Ableitung der Fluide führen. Eine Änderung der Strömungsverteilerstruktur ist dann immer mit einem erheblichen Engineering- und/oder Kostenaufwand verbunden. Zur Herstellung müssen neue Werkzeuge bereitgestellt werden. Bei dynamischen Änderungen der Strömungsverhältnisse fällt selbst diese Lösung weg.

Ein weiterer Nachteil besteht darin, dass durch die Kanal-/Stegstruktur konventioneller Bipolarplatten keine gleichmäßige Anpressdruckverteilung zwischen Bipolarplatte und Membran-Elektroden-Einheit gegeben ist. Im Bereich der Kanäle ist der Anpressdruck wesentlich geringer als im Bereich der Stege. Dies führt zu zusätzlichen elektrischen Widerständen bei der Stromeinleitung bzw. Stromabfuhr. Vor allem der Kontaktewiderstand zwischen den beteiligten Zellkomponenten wird hierdurch erhöht.

Bei Strömungsverteilerstrukturen mit poröser Struktur wird eine homogene Struktur mit konstanter Porosität eingesetzt, was zum Nachteil hat, dass die Struktur entweder zu grobporös mit guter Makroverteilung aber schlechter Mikroverteilung oder zu feinporös mit den entgegengesetzten Effekten ist.

Abdichtungen für den realen Betrieb können entweder nicht oder nur mit Hilfe aufwendiger Kunststoffrahmen-Dichtungs-Kombinationen realisiert werden. Diese bestehen aus einer hohen Anzahl einzelner Komponenten, weshalb ein praktischer Aufbau eines Zellstapels nicht oder nur schwer realisierbar ist. Ein Stapelaufbau mit sehr hoher Anzahl von Einzelkomponenten erhöht zudem die Wahrscheinlichkeit von Undichtigkeiten oder anderen Fehlfunktionen. Weiterhin kann keine Bipolarplatte mit poröser Struktur für Anodenseite und Kathodenseite in einem Fertigungsteil gefertigt werden. Poröse Verteilerstrukturen liegen lediglich als Monopolarplatten für Anode und Kathode vor. Bipolarplatten mit porösen Verteilerstrukturen, bei denen die Wasserzufuhr bzw. Wasserabfuhr zur Kathode und zur Anode im Zellstapel geleistet werden können, sind nicht bekannt.

Stand der Technik bilden die Druckschriften DE 600 12 799 T2, DE 10 2015 100 679 A1, US 6,037,072 A und US 2015/030959 A2.

Ausgehend von diesem Stand der Technik ist es eine Aufgabe der vorliegenden Erfindung, eine alternative Bipolarplattenanordnung bereitzustellen.

Zur Lösung dieser Aufgabe schafft die vorliegende Erfindung eine Bipolarplattenanordnung zur Ausbildung eines Elektrolyse- oder Brennstoffzellenstapels, umfassend eine metallische Trenneinrichtung, die dazu ausgelegt ist, eine fluiddichte Abdichtung zwischen der Anodenseite und der Kathodenseite zu erzeugen, und die sowohl anoden- als auch kathodenseitig jeweils mit Fluidzuführkanälen und Fluidabführkanälen versehen ist; zwei metallische Strömungsverteilereinheiten, die anoden- und kathodenseitig benachbart zu der zumindest einen Trenneinrichtung angeordnet sind, wobei jede Strömungsverteilereinheit dazu ausgelegt ist, ein ihr über die zumindest eine Trenneinrichtung zugeführtes Fluid zwischen den Fluidzuführkanälen und den Fluidabführkanälen zu verteilen; und fluiddicht an die Trenneinrichtung angebundene metallische Rahmenelemente, die jeweils eine der Strömungsverteilereinheiten umfänglich fluiddicht einfassen, wobei die Rahmenelemente Durchgangsöffnungen, die dazu ausgelegt sind, den Fluidzuführkanälen ein Fluid zuzuführen, und Durchgangsöffnungen aufweisen, die dazu ausgelegt sind, ein über die Fluidabführkanäle abgeführtes Fluid abzuführen.

Die erfindungsgemäße Bipolarplattenanordnung setzt sich somit aus mehreren separaten Bauteilen zusammen, und zwar aus der Trenneinrichtung, den Strömungsverteilereinheiten und den Rahmenelementen. Im Falle einer Wasserelektrolyse trennt die Trenneinrichtung die Anoden- und Kathodenräume zweier benachbarter Zellen gasdicht voneinander ab, leitet den elektrischen Strom homogen durch sich hindurch, leitet das Speisewasser auf die jeweilige Zellebene ein und leitet das Gemisch aus Wasser und Wasserstoff bzw. Sauerstoff aus der Zellebene ab. Die Strömungsverteilereinheiten verteilen das über die Trenneinrichtung zugeführte Speisewasser homogen über die Zellfläche. Die Rahmenelemente dienen hierzu, die Bipolarplattenanordnung im Bereich der Verteilerstrukturen gasdicht nach außen abzudichten und stellen den mechanischen Verbund zu den angrenzenden Membran-Elektroden-Einheiten her. Dank der Tatsache, dass die erfindungsgemäße Bipolarplattenanordnung aus mehreren Einzelbauteilen gefertigt ist, kann insbesondere die Ausbildung der Strömungsverteilereinheiten sehr frei gewählt werden, so dass sich innerhalb einer Zelle gewünschte Strömungsfelder sehr gut einstellen lassen. Zudem kann bei geeigneter Wahl eine ordnungsgemäße Funktionsweise einer Zelle auch dann gewährleistet werden, wenn sich während des Betriebs Abweichungen von demjenigen Betriebspunkt einstellen, für den diese ausgelegt ist. Aufgrund der Tatsache, dass alle Bauteile aus metallischen Materialien gefertigt sind, lassen sich diese über geeignete Fügeverfahren problemlos zu einer einteiligen Bipolarplattenanordnung fügen. Ein mögliches Fügeverfahren ist beispielsweise das Diffusionsschweißen. Hierbei werden alle Bauteile der Bipolarplattenanordnung entsprechend des vorgesehenen Aufbaus aufeinander gelegt und in einen beheizbaren Vakuumofen eingebracht. Zusätzlich beinhaltet der Ofen eine Pressvorrichtung, die über Kraft- und Wegsteuerung bewegt werden kann. Durch eine geeignete Kombination von Prozessatmosphäre, gegebenenfalls Schutzgas (meist Vakuum <10 exp-4 mbar), Vakuum, Temperatur, Presskraft und Prozesszeit werden die Bipolarplattenbauteile an den Kontaktstellen miteinander verschweißt. Die einzustellenden Prozessparameter hängen im Wesentlichen von den Materialen der einzelnen Bauteile und deren Größe sowie Design ab.

Bevorzugt weisen die Trenneinrichtung und die Rahmenelemente jeweils einen rechteckigen Außenumfang auf, wobei die Außenumfänge insbesondere deckungsgleich ausgebildet sind. Entsprechend können Trenneinrichtung und Rahmenelemente einfach aufeinandergelegt und gasdicht gefügt werden.

Erfindungsgemäß sind sämtliche Durchgangsöffnungen des einen Rahmenelementes in Flucht mit den Durchgangsöffnungen des anderen Rahmenelementes positioniert, und dass die Trenneinrichtung mit Durchgangsbohrungen versehen ist, die in Flucht mit den Durchgangsöffnungen der Rahmenelemente positioniert sind und diese mit den Fluidzuführkanälen und Fluidabführkanälen der Trenneinrichtung verbinden. Auf diese Weise wird ein einfach und preiswert herzustellender Aufbau geschaffen, über den die Zufuhr und Abfuhr von Fluiden über die Trenneinrichtung und die beiden Rahmenelemente realisiert werden.

Vorteilhaft sind die anodenseitigen Fluidzuführkanäle und die anodenseitigen Fluidabführkanäle einander gegenüber angeordnet, wobei die kathodenseitigen Fluidzuführkanäle und die kathodenseitigen Fluidabführkanäle einander gegenüberliegend angeordnet sind und wobei die anodenseitigen Fluidzuführkanäle und die kathodenseitigen Fluidzuführkanäle um 90° versetzt zueinander angeordnet sind. Auf diese Weise wird die elektrochemische Zelle im Kreuzstrom betrieben.

Bevorzugt sind die Fluidzuführkanäle und die Fluidabführkanäle in Form von an den anodenseitigen und kathodenseitigen Flächen der Trenneinrichtung ausgebildeten Nuten vorgesehen, die sich ausgehend von den Durchgangsbohrungen einwärts erstrecken. Hierdurch ergibt sich ein einfacher und preiswert herzustellender Aufbau. Dabei kann jeder Durchgangsbohrung eine einzelne Nut oder eine Mehrzahl von Nuten zugeordnet sein, die beispielsweise strahlenartig angeordnet sind.

Die Trenneinrichtung besteht gemäß einer Variante der vorliegenden Erfindung aus einer einzelnen Trennplatte, die dann an ihren anoden- und kathodenseitigen Flächen mit den Fluidzuführkanälen und den Fluidabführkanälen versehen ist.

Alternativ ist es auch möglich, dass die Trenneinrichtung zwei Trennplatten aufweist, die fest miteinander verbunden, insbesondere miteinander verlötet oder verschweißt sind. Dies kann aus fertigungstechnischer Sicht gegebenenfalls von Vorteil sein, da entsprechend jeweils nur eine Seite jeder Trennplatte mit Fluidzuführ- und Fluidabführkanälen versehen werden muss, die dann die Anodenseite oder die Kathodenseite der Trenneinrichtung bildet.

Vorteilhaft sind die Strömungsverteilereinheiten aus widerkehrende Durchgänge aufweisenden Lagen hergestellt, insbesondere aus Lagen in Form von Streckmetallen, Geweben und/oder Vliesen. Derartige mit wiederkehrenden Durchgängen versehene Lagen haben gegenüber Kanalstrukturen zum einen den Vorteil, dass die Größe der Durchgänge freier gewählt und entsprechend besser an Betriebsbedingungen angepasst werden kann. Zum anderen kann die Anpressdruckverteilung zwischen den Strömungsverteilereinheiten und den Membran-Elektroden-Einheiten deutlich gesenkt und deutlich gleichmäßiger gestaltet werden, was mit geringeren elektrischen Widerständen bei der Stromeinleitung im Falle einer Elektrolysezelle bzw. Stromabfuhr im Falle einer Brennstoffzelle einhergeht. Ferner lässt sich das Strömungsfeld durch Kombination von mehreren aufeinanderliegenden, ggf. unterschiedlich ausgebildeten Lagen gezielt beeinflussen.

Bevorzugt nimmt die Größe der Durchgänge zumindest einer Strömungsverteilereinheit, insbesondere beider Strömungsverteilereinheiten, in Richtung der Trenneinrichtung zu. Durch größere Durchgänge und eine entsprechend gröbere Struktur wird eine grobe Strömungsverteilung druckverlustarm über die gesamte zugehörige Fläche der Strömungsverteilereinheit zur Verfügung gestellt. Durch kleinere Durchgänge und eine entsprechend feinere Struktur wird die Strömung gleichmäßiger auf die aktive Zellfläche verteilt und die lokale mechanische Belastung der Membran-Elektroden-Einheit reduziert.

Die Trenneinrichtung und/oder zumindest eine der Strömungsverteilereinheiten und/oder die Rahmenelemente sind vorteilhaft aus einem korrosionsbeständigen Metall hergestellt oder mit einer korrosionsbeständigen Metallbeschichtung versehen. Hier bietet sich beispielsweise die Verwendung von Titan als korrosionsbeständiges Metall oder als korrosionsbeständige Metallbeschichtung an.

Vorteilhaft sind die Trenneinrichtung, die Strömungsverteilereinheiten und die Rahmenelemente miteinander verlötet oder verschweißt, wobei der Einsatz eines Diffusionsschweißverfahrens bevorzugt wird, wodurch in einfacher Weise ein einteiliger Aufbau unter Erzielung einer gasdichten Verbindung der Trenneinrichtung und der Rahmenelemente erzielt werden kann. Mit einteilig ausgebildeten Bipolarplatten lassen sich Elektrolyse- oder Brennstoffzellenstapel aufgrund der stark reduzierten Anzahl von Einzelteilen deutlich einfacher montieren. Ein weiterer Vorteil, der bei einer thermisch gefügten Bipolarplattenanordnung zum Tragen kommt, besteht darin, dass die Fluidzuführkanäle und die Fluidabführkanäle erfindungsgemäß an der zwischen den beiden Rahmenelementen aufgenommenen Trenneinrichtung und damit im Inneren der Bipolarplattenanordnung vorgesehen sind, so dass sich die Fluidzuführungskanäle und die Fluidabführungskanäle nicht negativ auf die Anpressdruckverteilung auswirken können, wenn erfindungsgemäße Bipolarplattenanordnungen mit Membran-Elektroden-Einheiten verbunden werden. Ein weiterer Vorteil der stoffschlüssig gefügten Bipolarplattenanordnung ist, dass es keine (bzw. stark reduzierte) Kontakt- oder Übergangswiderstände zwischen den Bauteilen der Bipolarplattenanordnung gibt. Diese Widerstände liegen bei aufeinandergelegten und verspannten Elementen in Abhängigkeit von der Anpresskraft vor und führen zu einer Verminderung des Wirkungsgrades.

Vorteilhaft ist eine metallische Gasdiffusionsschicht von außen an einer der Strömungsverteilereinheiten befestigt, insbesondere mittels Löten oder Schweißen, bevorzugt an der anodenseitig angeordneten Strömungsverteilereinheit.

Ferner schlägt die Erfindung vor, eine erfindungsgemäße Bipolarplattenanordnung zur Ausbildung eines Elektrolyse- oder Brennstoffzellenstapels zu verwenden.

Zudem schafft die vorliegende Erfindung zur Lösung der eingangs genannten Aufgabe einen Elektrolyse- oder Brennstoffzellenstapel umfassend eine Vielzahl von erfindungsgemäßen Bipolarplattenanordnungen.

Weitere Vorteile und Merkmale der vorliegenden Erfindung werden anhand der nachfolgenden Beschreibung einer Bipolarplattenanordnung gemäß einer Ausführungsform der vorliegenden Erfindung unter Bezugnahme auf die beiliegende Zeichnung deutlich. Darin ist
Figur 1 eine perspektivische Explosionsansicht einer Bipolarplattenanordnung gemäß einer Ausführungsform der vorliegenden Erfindung;
Figur 2 eine weitere perspektivische Explosionsansicht der Bipolarplattenanordnung;

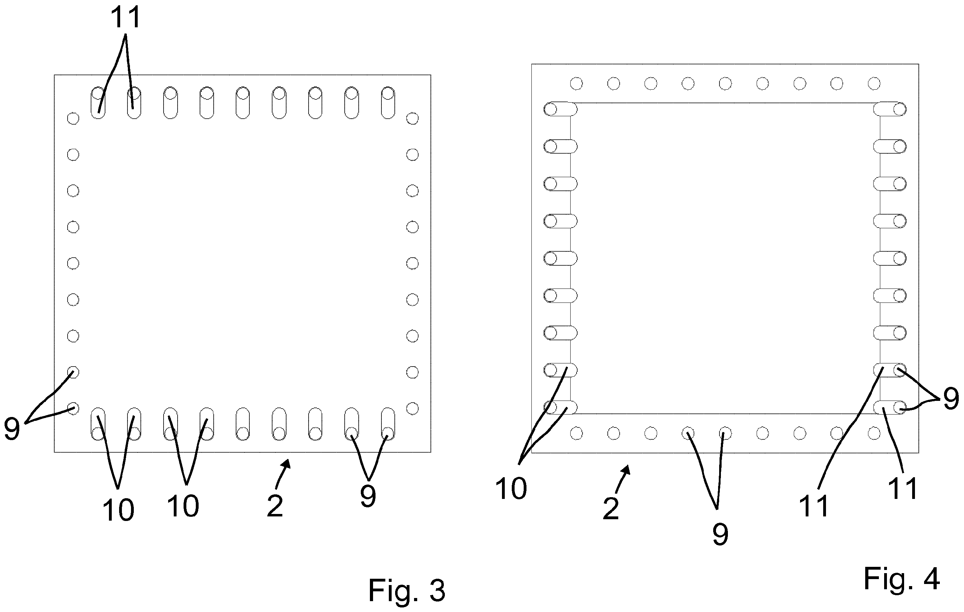

Figur 3 eine kathodenseitige Ansicht einer Trenneinrichtung der Bipolarplattenanordnung;
Figur 4 eine anodenseitige Ansicht der Trenneinrichtung;

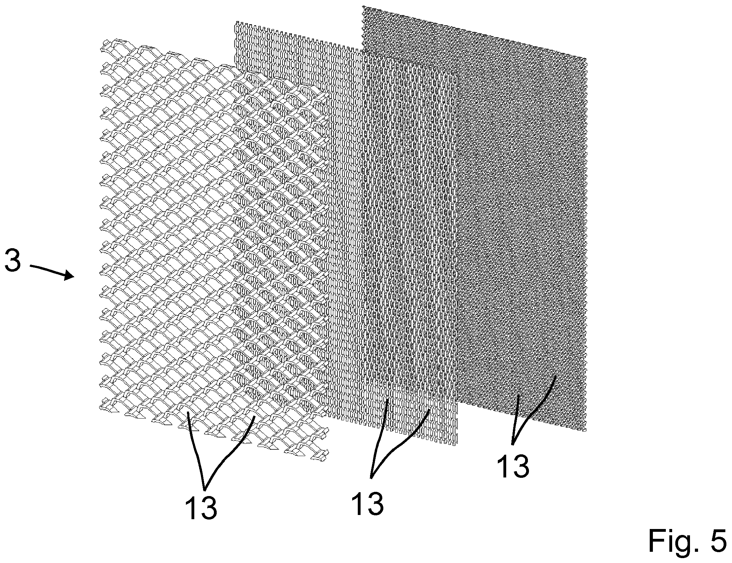

Figur 5 eine perspektivische Explosionsansicht einer in Figur 1 gezeigten kathodenseitigen Strömungsverteilereinheit;

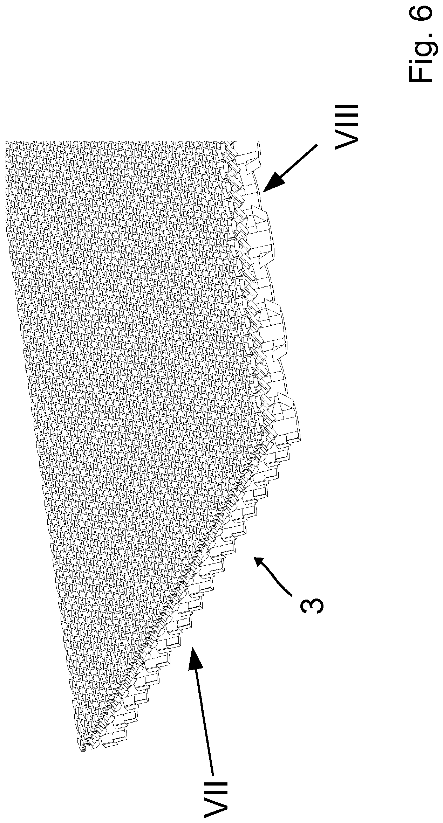

Figur 6 eine perspektivische Teilansicht der Strömungsverteilereinheit im montierten Zustand;

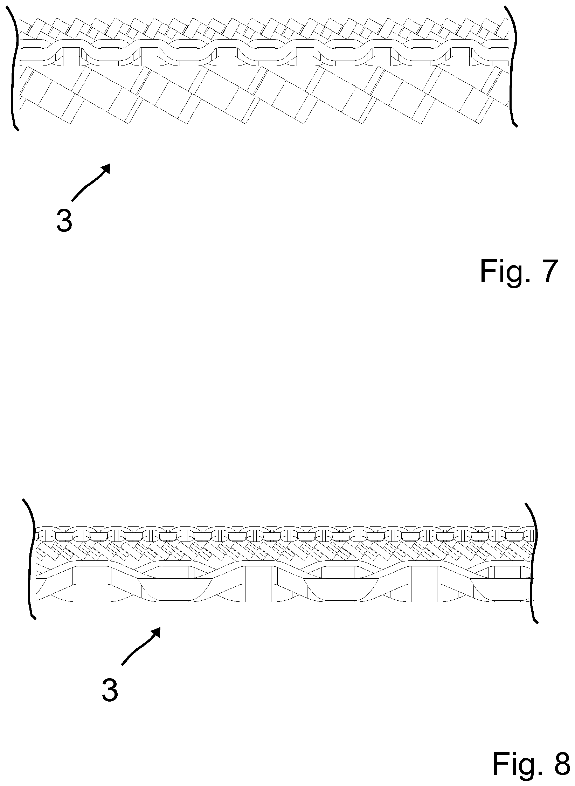

Figur 7 eine Teilseitenansicht der Strömungsverteilereinheit in Richtung des Pfeils VII in Figur 6;
Figur 8 eine Teilseitenansicht der Strömungsverteilereinheit in Richtung des Pfeils VIII in Figur 6;
Figur 9 eine Schnittansicht eines Teilbereiches der montierten Bipolarplatte und
Figur 10 eine Schnittansicht eines Teilbereiches der montierten Bipolarplatte wie in Figur 9 mit eingezeichneter Durchströmung.

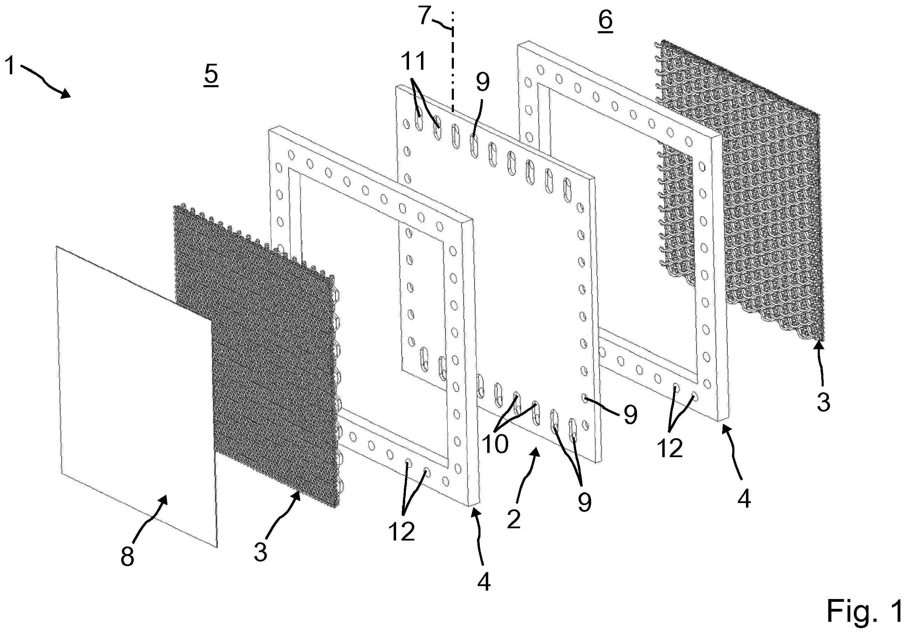

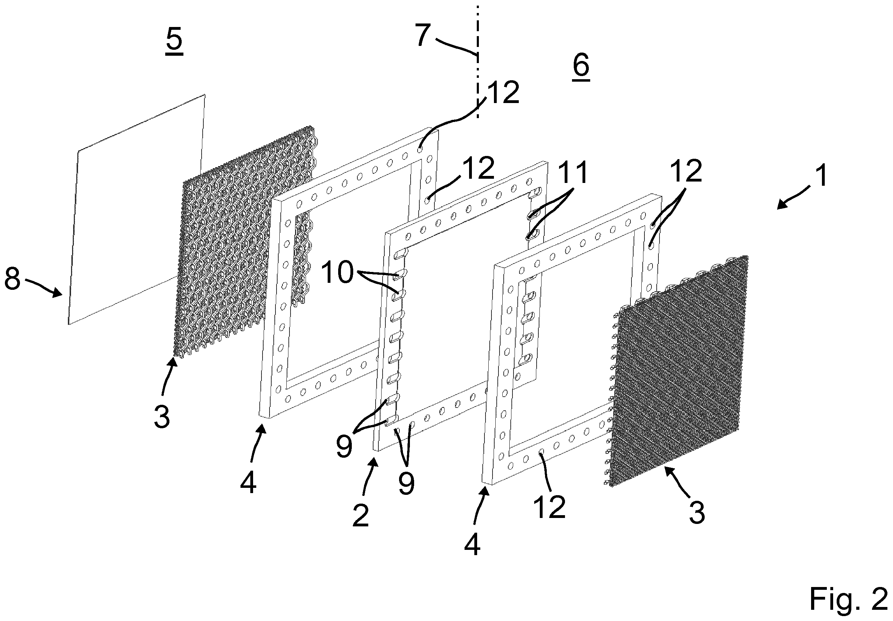

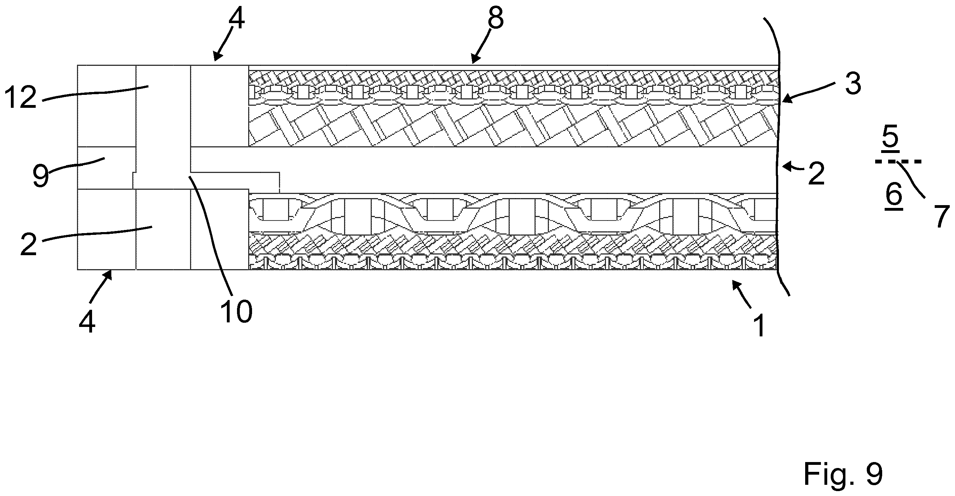

Die Figuren 1, 2 und 9 zeigen eine Bipolarplattenanordnung 1 gemäß einer Ausführungsform der vorliegenden Erfindung, die als Hauptkomponenten eine im Wesentlichen zentral angeordnete metallische Trenneinrichtung 2, zwei metallische Strömungsverteilereinheiten 3, die jeweils benachbart zur Trenneinrichtung 2 angeordnet sind, und zwei metallische Rahmenelemente 4 aufweist, welche die Strömungsverteilereinheiten 3 im montierten Zustand der Bipolarplattenanordnung 1 jeweils umfänglich gasdicht umfassen. Die Trenneinrichtung 2 trennt die Bipolarplattenanordnung 1 in eine Anodenseite 5 und in eine Kathodenseite 6, wobei die Trennung in den Figuren 1, 2 und 9 jeweils durch eine gestrichelte Linie 7 symbolisiert ist. Die Anodenseite 5 befindet sich in den Figuren 1 und 2 jeweils links und in Figur 9 oberhalb der gestrichelten Linie 7, die Kathodenseite 6 in den Figuren 1 und 2 rechts und in Figur 9 unterhalb der gestrichelten Linie 7. Als weitere Hauptkomponente ist anodenseitig eine die auswärts weisende Fläche der Strömungsverteilereinheit 3 bedeckende metallische Gasdiffusionsschicht 8 vorgesehen, die grundsätzlich aber optional ist und auch einen Bestandteil einer zugehörigen Membran-Elektroden-Einheit darstellen kann.

Die metallische Trenneinrichtung 2 ist dazu ausgelegt, eine fluiddichte Abdichtung zwischen der Anodenseite 5 und der Kathodenseite 6 zu erzeugen. Sie besteht vorliegend aus einer einzelnen Trennplatte in Form eines Bleches. Grundsätzlich ist es aber auch möglich, die Trenneinrichtung 2 aus zwei Trennplatten auszubilden, die dann fest miteinander verbunden werden, beispielsweise mittels Löten oder Schweißen. Die Trenneinrichtung 2 weist einen rechteckigen, vorliegend quadratischen Außenumfang auf und ist entlang ihrer Plattenkanten mit Durchgangsbohrungen 9 versehen, die bevorzugt in gleichmäßigen Abständen voneinander angeordnet sind. An zwei einander gegenüberliegenden Plattenkanten einer Plattenseite, beispielsweise an der zur Anodenseite 5 weisenden Plattenseite, sind ausgehend von den Durchgangsbohrungen 9 zusätzliche, sich einwärts in Richtung Plattenmitte erstreckende, nutartig ausgebildete Kanäle bzw. Sacklöcher eingebracht, wobei die sich entlang einer Plattenkante erstreckenden Kanäle Fluidzuführkanäle 10 und die sich entlang der gegenüberliegenden Plattenkante erstreckenden Kanäle Fluidabführkanäle 11 bilden. Die Tiefe der Fluidzuführkanäle 10 und Fluidabführkanäle 11 ist dabei jeweils geringer als die Plattendicke. Auf der anderen Plattenseite sind diese Fluidzuführkanäle 10 und Fluidabführkanäle 11 bildenden zusätzlichen Kanäle ebenso eingebracht, allerdings an denjenigen Durchgangsbohrungen 9, die sich entlang der um 90° versetzten Plattenkanten erstrecken. Damit findet sich auf der Rückseite eines Fluidzuführkanals 10 bzw. Fluidabführkanals 11 nie ein anderer Fluidzuführkanal 10 oder Fluidabführkanal 11.

Die metallischen Rahmenelemente 4 sind analog zu der Trenneinrichtung 2 ebenfalls quadratisch ausgebildet, wobei der Außenumfang der Rahmenelemente 4 jeweils an den Außenumfang der Trenneinrichtung 2 angepasst ist. Jedes Rahmenelement 4 ist entlang seiner Seitenkanten mit Durchgangsöffnungen 12 versehen, deren Anzahl und Position der Anzahl und Position der Durchgangsbohrungen 9 der Trenneinrichtung 2 entspricht, so dass die Durchgangsöffnungen 12 der Rahmenelemente 4 und die Durchgangsbohrungen 9 der Trenneinrichtung 2 miteinander fluchten, sobald die Rahmenelemente 4 beidseitig der Trenneinrichtung 2 in der vorgesehenen Weise angelegt werden.

Die metallischen Strömungsverteilereinheiten 3 sind vorliegend jeweils durch einen Verbund aus Streckmetallen gebildet, wobei grundsätzlich auch metallische Gewebe, Vliese oder dergleichen verwendet werden können. Hierbei besitzen die verwendeten Streckmetalle jeweils unterschiedlich große Durchgänge 13 und damit verschiedene Porösitäten. Im dargestellten Ausführungsbeispiel ist eine Streckmetallkombination aus drei unterschiedlichen Streckmetallen gewählt. Ein grobes Streckmetall, das jeweils zur Trenneinrichtung weisend angeordnet ist, sorgt für die grobe Strömungsverteilung und den mechanischen Support. Das mittlere und das feine Streckmetall dienen zur Verteilung der Anpresskraft und der Strömung auf die aktive Zellfläche. Die Materialien der Strömungsverteilereinheiten 3 werden passgenau in den Innenumfang der Rahmenelemente 4 eingelegt. Dabei kann der Aufbau der Materialien für die Strömungsverteilung auf der Anodenseite 5 und Kathodenseite 6 durchaus unterschiedlich sein. Im vorliegenden Fall ist der Streckmetallverbund ebenfalls bei Anode und Kathode um 90° zueinander gedreht. Die Dicken der Materialien und der zugehörigen Rahmenelemente 4 sind unter Berücksichtigung des anschließenden Fügeprozesses aufeinander abgestimmt.

Sämtliche Bauteile sind vorliegend aus Titan hergestellt, wobei grundsätzlich auch andere metallische Werkstoffe verwendet werden können, die den späteren Anforderungen genügen, insbesondere hinsichtlich der Korrosionsfestigkeit.

Zur Montage der Bipolarplattenanordnung 1 werden die einzelnen Bauteile bevorzugt unter Einsatz eines thermischen Fügeverfahrens gefügt, vorliegend unter Einsatz eines Diffusionsschweißverfahrens. Hierbei werden alle Bauteile der Bipolarplattenanordnung 1 entsprechend des vorgesehenen Aufbaus aufeinandergelegt und in einen beheizbaren Vakuumofen eingebracht. Zusätzlich beinhaltet der Ofen eine Pressvorrichtung, die über Kraft- und Wegsteuerung bewegt werden kann. Durch eine geeignete Kombination von Prozessatmosphäre, gegebenenfalls Schutzgas (meist Vakuum <10 exp-4 mbar), Vakuum, Temperatur, Presskraft und Prozesszeit werden die Bipolarplattenbauteile an den Kontaktstellen miteinander verschweißt. Die einzustellenden Prozessparameter hängen im Wesentlichen von den Materialen der einzelnen Bauteile und deren Größe sowie Design ab.

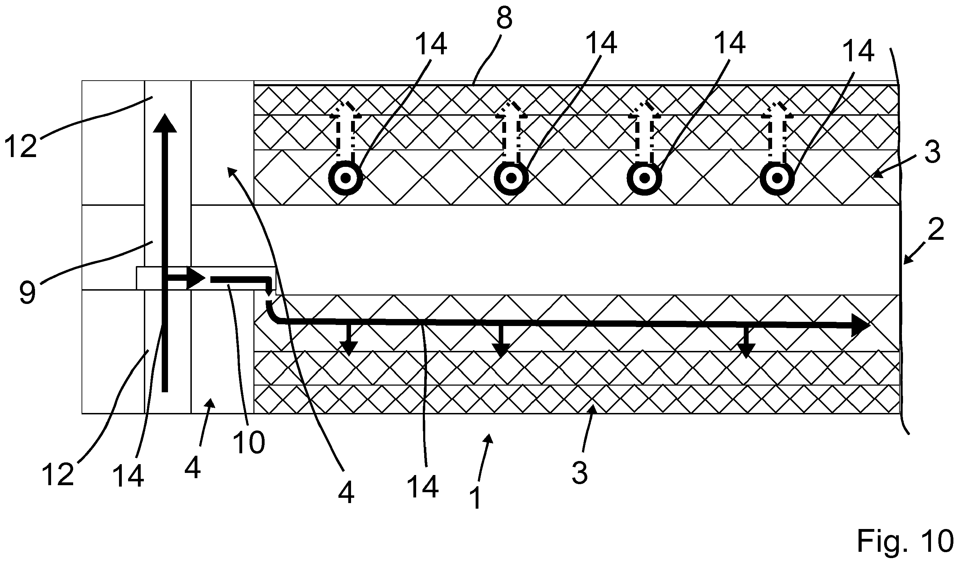

Im Elektrolyse- oder Brennstoffzellenstapel bildet die Bipolarplattenanordnung 1 ebenso wie die Membran- Elektrodeneinheit eine Wiederholungseinheit. Zur Herstellung eines Elektrolyse- oder Brennstoffzellenstapels werden die Wiederholeinheiten entsprechend gestapelt und in an und für sich bekannter Weise miteinander verbunden, beispielsweise unter Verwendung von Endplatten und Spannelementen aufeinandergepresst. Die Fluid- oder Medienzufuhr bzw. -abfuhr erfolgt separat für die Anoden- und Kathodenräume. Jede sich entlang einer Seitenkante des montierten Elektrolyse- oder Brennstoffzellenstapels erstreckende Lochreihe bestehend aus Durchgangsbohrungen 9, Durchgangsöffnungen 12 und Fluidzu- bzw. Fluidabführkanälen 10, 11 repräsentiert die Fluidzufuhr bzw. Fluidabfuhr für die Anodenseie 5 bzw. Kathodenseite 6. Zufuhr und Abfuhr erfolgen immer über gegenüberliegende Lochreihen. Damit sind die Anschlüsse für die Anodenräume um 90 ° verdreht zu den Anschlüssen für die Kathodenräume. Es bildet sich eine Kreuzstromkonfiguration bezüglich der Fluide in den Anoden- und Kathodenräumen aus. Üblicherweise werden die Medien mittels einer Leitung an den Elektrolyse- oder Brennstoffzellenstapel angeschlossen. In diesem Fall ist außerhalb oder innerhalb des Stapels noch ein vorliegend nicht näher dargestellter länglicher Verteiler vorzusehen, der das zugeführte Fluid von der Leitung auf die einzelnen Lochreihen verteilt. Bei der Fluidzufuhr über eine Lochreihe gibt es bei der Durchströmung einer Bipolarplattenanordnung 1 eine Aufteilung in zwei Teilströme. Die Durchströmung durch den Querschnitt der Bipolarplattenanordnung ist in Figur 10 durch entsprechende Pfeile 14 angedeutet. Diese Aufteilung wird durch die Anordnung der Fluidzuführkanäle 10 und der Fluidabführkanäle 11 der Trenneinrichtung 2 bestimmt. Der Teilstrom, der in diesen Kanälen abgezweigt wird, hat einen Zugang zu den Strömungsverteilereinheiten 3 und wird von unten in das grobe Streckmetall eingeleitet. Das wird dadurch möglich, dass die Zuführkanäle 10 weiter ins Platteninnere hineinreichen als die Rahmenelemente 4. Durch die gegenüberliegenden Fluidabführkanäle 11 erfolgt entsprechend die Abströmung der Fluide. Durch die Verdrehung der Fluidzuführkanäle 10 und Fluidabführkanäle 11 auf der Anodenseite 5 und der Kathodenseite 6 um 90° wird die elektrochemische Zelle im Kreuzstrom betrieben.

### Bezugszeichenliste

- 1: Bipolarplattenanordnung
- 2: Trenneinrichtung
- 3: Strömungsverteilereinheit
- 4: Rahmenelement
- 5: Anodenseite
- 6: Kathodenseite
- 7: gestrichelte Linie
- 8: Gasdiffusionsschicht
- 9: Durchgangsbohrung
- 10: Fluidzuführkanal
- 11: Fluidabführkanal
- 12: Durchgangsöffnung
- 13: Durchgang
- 14: Pfeile

## Patentansprüche

1. Bipolarplattenanordnung (1) zur Ausbildung eines Elektrolyse- oder Brennstoffzellenstapels, umfassend
- eine metallische Trenneinrichtung (2), die dazu ausgelegt ist, eine fluiddichte Abdichtung zwischen der Anodenseite (5) und der Kathodenseite (6) zu erzeugen, und die sowohl anoden- als auch kathodenseitig jeweils mit Fluidzuführkanälen (10) und Fluidabführkanälen (11) versehen ist,
- zwei metallische Strömungsverteilereinheiten (3), die anoden- und kathodenseitig benachbart zur Trenneinrichtung (2) angeordnet sind, wobei jede Strömungsverteilereinheit (3) dazu ausgelegt ist, ein ihr über die Trenneinrichtung (2) zugeführtes Fluid zwischen den Fluidzuführkanälen (10) und den Fluidabführkanälen (11) zu verteilen, und
- fluiddicht an die Trenneinrichtung (2) angebundene metallische Rahmenelemente (4), die jeweils eine der Strömungsverteilereinheiten (3) umfänglich fluiddicht einfassen, wobei die Rahmenelemente (4) Durchgangsöffnungen (12), die dazu ausgelegt sind, den Fluidzuführkanälen (10) ein Fluid zuzuführen, und Durchgangsöffnungen (12) aufweisen, die dazu ausgelegt sind, ein über die Fluidabführkanäle (11) abgeführtes Fluid abzuführen,
wobei sämtliche Durchgangsöffnungen (12) des einen Rahmenelementes (4) in Flucht mit den Durchgangsöffnungen (12) des anderen Rahmenelementes (4) positioniert sind, und dass die Trenneinrichtung (2) mit Durchgangsbohrungen (9) versehen ist, die in Flucht mit den Durchgangsöffnungen (12) der Rahmenelemente (4) positionert sind und diese mit den Fluidzuführkanälen (10) und Fluidabführkanälen (11) der Trenneinrichtung (2) verbinden.

2. Bipolarplattenanordnung (1) nach Anspruch 1, **dadurch gekennzeichnet, dass** die Trenneinrichtung (2) und die Rahmenelemente (4) jeweils einen rechteckigen Außenumfang aufweisen, wobei die Außenumfänge insbesondere deckungsgleich ausgebildet sind.

3. Bipolarplattenanordnung (1) nach einem der vorhergehenden Ansprüche, **dadurch gekennzeichnet, dass** die anodenseitigen Fluidzuführkanäle (10) und die anodenseitigen Fluidabführkanäle (11) einander gegenüberliegend angeordnet sind, dass die kathodenseitigen Fluidzuführkanäle (10) und die kathodenseitigen Fluidabführkanäle (11) einander gegenüberliegend angeordnet sind, und dass die anodenseitigen Fluidzuführkanäle (10) und die kathodenseitigen Fluidzuführkanäle (10) um 90° versetzt zueinander angeordnet sind.

4. Bipolarplattenanordnung (1) nach Anspruch 3, **dadurch gekennzeichnet, dass** die Fluidzuführkanäle (10) und die Fluidabführkanäle (11) in Form von an den anodenseitigen und kathodenseitigen Flächen der Trenneinrichtung (2) ausgebildeten Nuten vorgesehen sind, die sich ausgehend von den Durchgangsbohrungen (9) einwärts erstrecken.

5. Bipolarplattenanordnung (1) nach einem der vorhergehenden Ansprüche, **dadurch gekennzeichnet, dass** die Trenneinrichtung (2) aus einer einzelnen Trennplatte besteht.

6. Bipolarplattenanordnung (1) nach einem der Ansprüche 1 bis 4, **dadurch gekennzeichnet, dass** die Trenneinrichtung (2) zwei Trennplatten aufweist, die fest miteinander verbunden, insbesondere miteinander verlötet oder verschweißt sind.

7. Bipolarplattenanordnung (1) nach einem der vorhergehenden Ansprüche, **dadurch gekennzeichnet, dass** die Strömungsverteilereinheiten (3) aus wiederkehrende Durchgänge aufweisenden Lagen hergestellt sind, insbesondere aus Lagen in Form von Streckmetallen, Geweben und/oder Vliesen.

8. Bipolarplattenanordnung (1) nach Anspruch 7, **dadurch gekennzeichnet, dass** die Größe der Durchgänge zumindest einer Strömungsverteilereinheit (3), insbesondere beider Strömungsverteilereinheiten (3), in Richtung der Trenneinrichtung (2) zunimmt.

9. Bipolarplattenanordnung (1) nach einem der vorhergehenden Ansprüche, **dadurch gekennzeichnet, dass** die Trenneinrichtung (2) und/oder zumindest eine der Strömungsverteilereinheiten (3) und/oder die Rahmenelemente (4) aus einem korrosionsbeständigen Metall hergestellt oder mit einer korrosionsbeständigen Metallbeschichtung versehen sind.

10. Bipolarplattenanordnung (1) nach einem der vorhergehenden Ansprüche, **dadurch gekennzeichnet, dass** die Trenneinrichtung (2), die Strömungsverteilereinheiten (3) und die Rahmenelemente (4) miteinander verlötet oder verschweißt sind.

11. Bipolarplattenanordnung (1) nach einem der vorhergehenden Ansprüche, **dadurch gekennzeichnet, dass** eine metallische Gasdiffusionsschicht (8) von außen an einer der Strömungsverteilereinheiten (3) befestigt ist, insbesondere mittels Löten oder Schweißen, bevorzugt an der anodenseitig angeordneten Strömungsverteilereinheit (3).

12. Verwendung einer Bipolarplattenanordnung (1) nach einem der vorhergehenden Ansprüche zur Ausbildung eines Elektrolyse- oder Brennstoffzellenstapels.

13. Elektrolyse- oder Brennstoffzellenstapel umfassend eine Vielzahl von Bipolarplattenanordnungen (1) nach einem der Ansprüche 1 bis 11.

## Claims

1. A bipolar plate assembly (1) for forming an electrolytic or fuel cell stack comprising
- a metallic separator unit (2) adapted to create a fluid-tight seal between the anode side (5) and the cathode side (6) and provided with fluid supply channels (10) and fluid discharge channels (11) on both the anode and cathode sides respectively,
- two metallic flow distributor units (3) which are arranged adjacent to the separator unit (2) on the anode and cathode sides, each flow distributor unit (3) being designed to distribute a fluid supplied to it via the separator unit (2) between the fluid supply channels (10) and the fluid discharge channels (11), and
- metallic frame elements (4) which are connected to the separator unit (2) in a fluid-tight manner and which each surround one of the flow distributor units (3) circumferentially in a fluid-tight manner, the frame elements (4) having through-openings (12) which are designed to supply a fluid to the fluid supply channels (10) and through-openings (12) which are designed to discharge a fluid discharged via the fluid discharge ducts (11),
wherein all the through-holes (12) of one frame member (4) are positioned in alignment with the through-holes (12) of the other frame member (4), and in that the separator unit (2) is provided with through-holes (9) positioned in alignment with the through-holes (12) of the frame members (4) and connecting them to the fluid supply channels (10) and fluid discharge channels (11) of the separator unit (2).

2. Bipolar plate assembly (1) according to claim 1, **characterized in that** the separator unit (2) and the frame elements (4) each have a rectangular outer circumference, the outer circumferences being designed in particular to be congruent.

3. Bipolar plate assembly (1) according to one of the preceding claims, **characterized in that** the anode-side fluid supply channels (10) and the anode-side fluid discharge channels (11) are arranged opposite one another, **in that** the cathode-side fluid supply channels (10) and the cathode-side fluid discharge channels (11) are arranged opposite one another, and **in that** the anode-side fluid supply channels (10) and the cathode-side fluid supply channels (10) are arranged offset by 90° with respect to one another.

4. Bipolar plate assembly (1) according to claim 3, **characterized in that** the fluid supply channels (10) and the fluid discharge channels (11) are provided in the form of grooves which are formed on the anode-side and cathode-side surfaces of the separator unit (2) and which extend inwards from the through-holes (9).

5. Bipolar plate assembly (1) according to one of the preceding claims, **characterized in that** the separator unit (2) consists of a single separating plate.

6. Bipolar plate assembly (1) according to one of the claims 1 to 4, **characterized in that** the separator unit (2) has two separating plates which are firmly connected to one another, in particular soldered or welded to one another.

7. Bipolar plate assembly (1) according to one of the preceding claims, **characterized in that** the flow distributor units (3) are made of layers having recurring passages, in particular of layers in the form of expanded metals, fabrics and/or non-wovens.

8. Bipolar plate assembly (1) according to claim 7, **characterized in that** the size of the passages of at least one flow distributor unit (3), in particular of both flow distributor units (3), increases in the direction of the separator unit (2).

9. Bipolar plate assembly (1) according to one of the preceding claims, **characterized in that** the separator unit (2) and/or at least one of the flow distributor units (3) and/or the frame elements (4) are made of a corrosion-resistant metal or are provided with a corrosion-resistant metal coating.

10. Bipolar plate assembly (1) according to one of the preceding claims, **characterized in that** the separator unit (2), the flow distributor units (3) and the frame elements (4) are soldered or welded to one another.

11. Bipolar plate assembly (1) according to one of the preceding claims, **characterized in that** a metallic gas diffusion layer (8) is attached from the outside to one of the flow distributor units (3), in particular by means of soldering or welding, preferably to the flow distributor unit (3) arranged on the anode side.

12. Use of a bipolar plate assembly (1) according to one of the preceding claims for forming an electrolysis or fuel cell stack.

13. Electrolysis or fuel cell stack comprising a plurality of bipolar plate assemblies (1) according to any one of claims 1 to 11.

## Revendications

1. Ensemble de plaques bipolaires (1) pour former un empilement de cellules d'électrolyse ou piles à combustible, comprenant
- un dispositif de séparation (2) en métal qui est conçu pour créer un joint étanche aux fluides entre le côté anode (5) et le côté cathode (6) et qui est pourvu de canaux d'alimentation de fluide (10) et de canaux d'évacuation de fluide (11), respectivement, tant du côté anode que du côté cathode,
- deux unités de distribution de flux métalliques (3), qui sont disposées du côté de l'anode et du côté de la cathode à proximité du dispositif de séparation (2), chaque unité de distribution de flux (3) étant conçue pour distribuer un fluide qui lui est amené par le dispositif de séparation (2) entre les canaux d'alimentation de fluide (10) et les canaux d'évacuation de fluide (11), et
- des éléments de cadre métalliques (4) reliés de manière étanche aux fluides au dispositif de séparation (2), qui entourent chacun de manière étanche aux fluides la périphérie de l'une des unités de distribution de flux (3), les éléments de cadre (4) présentant des ouvertures de passage (12) qui sont conçues pour amener un fluide aux canaux d'alimentation de fluide (10) et des ouvertures de passage (12) qui sont conçues pour évacuer un fluide évacué par les canaux d'évacuation de fluide (11),
toutes les ouvertures de passage (12) d'un élément de cadre (4) étant positionnées en alignement avec les ouvertures de passage (12) de l'autre élément de cadre (4), et le dispositif de séparation (2) étant pourvu d'alésages de passage (9) qui sont positionnés en alignement avec les ouvertures de passage (12) des éléments de cadre (4) et qui relient ces derniers aux canaux d'alimentation de fluide (10) et aux canaux d'évacuation de fluide (11) du dispositif de séparation (2).

2. Ensemble de plaques bipolaires (1) selon la revendication 1, **caractérisé en ce que** le dispositif de séparation (2) et les éléments de cadre (4) présentent chacun un périmètre extérieur rectangulaire, les périmètres extérieurs étant en particulier réalisés de manière à coïncider.

3. Ensemble de plaques bipolaires (1) selon l'une des revendications précédentes, **caractérisé en ce que** les canaux d'alimentation de fluide côté anode (10) et les canaux d'évacuation de fluide côté anode (11) sont disposés en face les uns des autres, **en ce que** les canaux d'alimentation de fluide côté cathode (10) et les canaux d'évacuation de fluide côté cathode (11) sont disposés en face les uns des autres, et **en ce que** les canaux d'alimentation de fluide côté anode (10) et les canaux d'alimentation en fluide côté cathode (10) sont décalés de 90° les uns par rapport aux autres.

4. Ensemble de plaques bipolaires (1) selon la revendication 3, **caractérisé en ce que** les canaux d'alimentation de fluide (10) et les canaux d'évacuation de fluide (11) sont prévus sous la forme de rainures formées sur les surfaces côté anode et côté cathode du dispositif de séparation (2), qui s'étendent vers l'intérieur à partir des alésages de panage (9).

5. Ensemble de plaques bipolaires (1) selon l'une des revendications précédentes, **caractérisé en ce que** le dispositif de séparation (2) est constitué d'une seule plaque de séparation.

6. Ensemble de plaques bipolaires (1) selon l'une des revendications 1 à 4, **caractérisé en ce que** le dispositif de séparation (2) comprend deux plaques de séparation qui sont solidement reliées entre elles, en particulier brasées ou soudées entre elles.

7. Ensemble de plaques bipolaires (1) selon l'une des revendications précédentes, **caractérisé en ce que** les unités de distribution de flux (3) sont fabriquées à partir de couches présentant des passages répétés, en particulier à partir de couches sous forme de métal déployé, de tissus et/ou de non-tissés.

8. Ensemble de plaques bipolaires (1) selon la revendication 7, **caractérisé en ce que** la taille des passages d'au moins une unité de distribution de flux (3), en particulier des deux unités de distribution de flux (3), augmente en direction du dispositif de séparation (2).

9. Ensemble de plaques bipolaires (1) selon l'une des revendications précédentes, **caractérisé en ce que** le dispositif de séparation (2) et/ou au moins l'une des unités de distribution de flux (3) et/ou les éléments de cadre (4) sont fabriqués en un métal résistant à la corrosion ou sont pourvus d'un revêtement métallique résistant à la corrosion.

10. Ensemble de plaques bipolaires (1) selon l'une des revendications précédentes, **caractérisé en ce que** le dispositif de séparation (2), les unités de distribution de flux (3) et les éléments de cadre (4) sont brasés ou soudés les uns aux autres.

11. Ensemble de plaques bipolaires (1) selon l'une des revendications précédentes, **caractérisé en ce qu'**une couche métallique de diffusion de gaz (8) est fixée de l'extérieur à l'une des unités de distribution de flux (3), en particulier par brasage ou soudage, de préférence à l'unité de distribution de flux (3) disposée côté anode.

12. Utilisation d'un ensemble de plaques bipolaires (1) selon l'une des revendications précédentes pour former un empilement de cellules d'électrolyse ou de piles à combustible.

13. Empilement d'électrolyse ou de piles à combustible comprenant une pluralité d'ensembles de plaques bipolaires (1) selon l'une des revendications 1 à 11.
